# DEMANDE DE BREVET EUROPEEN

(11) **EP 1 350 615 A1**
(43) Date de publication de la demande: **08.10.2003**
(21) Numéro de dépôt: 03356050.9
(22) Date de dépôt: 20.03.2003
(51) Int. Cl.: B29C 70/46, B29C 70/16, B29B 15/10, D04H 13/00, D04H 3/04

(54) **Produit de renfort**

(30) Priorité: 02.04.2002 FR 0204091
(71) Demandeur: CHOMARAT COMPOSITES, 75002 Paris (FR)
(72) Inventeur: Maupetit, Jérôme, 07130 Soyons (FR); Machado-Valente, Fransisco, 07160 Le Cheylard (FR); Baudonnel, Jacques, 07160 Le Cheylard (FR)
(74) Mandataire: Thibault, Jean-Marc

(57) **Abrégé**

- Produit de renforcement.
- Le produit de renfort comprenant une première nappe (**2**) de fils de renfort (**3**) parallèles entre eux et une seconde nappe (**4**) de fils de renfort (**5**) parallèles entre eux et s'étendant transversalement par rapport à la première nappe (**2**) est caractérisé en ce que les fils de renfort (**3**) de la première nappe (**2**) sont partiellement recouverts d'une poudre à base de matière thermoplastique ou thermodurcie qui assure une liaison par points entre les fils de renfort (**3**) au sein de la première nappe (**2**), d'une part, et entre les fils de renfort (**3**) de la première nappe (**2**) et ceux (**5**) de la seconde nappe (**4**), d'autre part.
- Application à la constitution d'armature de renforcement pour produit composite.

## Description

La présente invention est relative au domaine des produits de renforcement à caractère cohérent, qui sont plus particulièrement destinés à constituer des armatures.

L'objet de l'invention vise, plus particulièrement, les produits destinés à constituer des armatures de renforcement en étant incorporées à une matrice.

Dans de nombreux domaines, il est souhaité pouvoir renforcer un produit fabriqué de manière à accroître certaines caractéristiques mécaniques conférées par la matière constitutive mise en oeuvre pour la réalisation du produit composite.

Il est ainsi connu d'utiliser des armatures de renforcement en relation avec le ciment, le béton, les matières plastiques et les résines notamment.

Une telle armature de renforcement peut être constituée, à partir d'un réseau maillé qui est confectionné ou produit à partir de fibres qui peuvent être unidirectionnelles pour certaines applications ou tissées en laizes de plus ou moins grande largeur.

L'art antérieur propose également d'autres solutions : le brevet français publié sous le numéro FR 2 792 952, par exemple, propose un produit ajouré, de type grille, composé d'au moins une première nappe tendue de fils de renfort et d'une nappe transversale de fils de renfort, lesdits fils étant croisés sans entrelacement donc sans embuvage et étant liés, au moins localement par fusion d'une matière de liage à base de matière thermoplastique au moins partiellement fondue. Dans ce cas, la liaison entre les deux nappes est assurée par des fibres ou fils de liage qui sont réalisés au moins en partie à base de matière thermoplastique. Il est également précisé que de telles fibres de liage peuvent avantageusement être formées par une matière constitutive des fils des deux nappes transversales, ayant subie une phase d'enrobage ou de gainage avec une matière thermoplastique.

Ainsi, dans ce type de renfort, lorsque les fibres ou fils de liage sont présents en faible quantité, les nappes constitutives de la grille ne sont liées qu'au niveau des fils ou fibres de liage. La liaison entre les nappes n'est donc pas homogène au sein de l'armature de renforcement, ce qui peut poser des problèmes, après injection de la résine. En effet, le matériau composite obtenu n'étant pas homogène, il existe des risques de fissuration. De plus, lors de la mise en oeuvre, c'est-à-dire après découpe et fluage de la résine, les fibres dans les zones moins liées provoquent des défauts de qualité ou de mécanisation par modification de placements des renforts.

Au contraire, lorsque les nappes sont essentiellement constituées de fils enrobés ou gainés de matière thermoplastique, la liaison entre les différentes nappes est certes plus homogène, mais l'enrobage ou gainage constitue un écran filmogène pour la matrice injectée, et ce sur toute la surface développée des fils. De plus, de tels fils enrobés sont raides et moins manipulables.

L'objet de l'invention est de remédier à ces inconvénient en proposant une nouvelle armature de renforcement ou produit de renfort se présentant sous une forme plane, ayant un caractère cohérent, tout en présentant une surface importante compatible avec une imprégnation ultérieure du produit de renfort avec une matrice de type résine. Par caractère cohérent, il convient de considérer que l'armature est réalisée de manière à présenter une tenue propre, capable de résister à certaines contraintes de manipulation, voire de mise en oeuvre pour l'obtention d'un produit semi-fini ultérieur.

Un autre objectif de l'invention est de fournir un produit de renfort présentant une liaison entre les fils de renfort plus homogène, autorisant les découpes.

Un autre objectif selon l'invention est de proposer un produit de renfort présentant une souplesse suffisante pour permettre la fabrication de pièces composites moulées en forme.

Un autre objectif de l'invention est de proposer un nouveau produit qui puisse être fabriqué aisément et à prix de revient intéressant, de manière industrielle, selon des largeurs variables, ainsi que pour présenter des facteurs d'ouverture adaptés aux applications visées.

Pour atteindre les objectifs ci-dessus, le nouveau produit selon l'invention comprend une première nappe de fils de renfort parallèles entre eux et une seconde nappe de fils de renfort parallèles entre eux et s'étendant transversalement par rapport à la première nappe, les fils de renfort de la première nappe étant partiellement recouverts d'une poudre à base de matière thermoplastique ou thermodurcie qui assure une liaison par points entre les fils de renfort de la première nappe, d'une part, et entre les fils de renfort de la première nappe et ceux de la seconde nappe, d'autre part.

La présente invention a également pour objet un procédé de fabrication d'un produit de renfort selon l'invention comprenant les étapes suivantes :
**a)** une première nappe de fils de renfort parallèles entre eux, est constituée puis passée dans de la poudre à base de matière thermoplastique ou thermodurcissable,
**b)** la première nappe ainsi obtenue est soumise à des vibrations, afin d'éliminer une partie de la poudre déposée sur la surface des fils de renfort,
**c)** une seconde nappe de fils de renfort parallèles entre eux est déposée sur la première nappe, la seconde nappe s'étendant transversalement à la première nappe sans entrecroisement,
**d)** les deux nappes sont assemblées par thermocompressage.

Diverses autres caractéristiques de l'objet de l'invention ressortent de la description faite ci-dessous en référence aux dessins annexés qui montrent, à titre d'exemples non limitatifs, des formes de réalisation de l'objet de l'invention.
La **fig. 1** est une perspective partielle représentant, schématiquement, une portion de nouveau produit conforme à l'invention.
La **fig. 2** est une vue schématique en perspective, volontairement à plus grande échelle, d'un fil de renfort de la première nappe.
La **fig. 3** est une coupe partielle prise sensiblement selon le plan **III-III** de la **fig. 1,** à plus grande échelle.
La **fig. 4** est une coupe, analogue à la **fig. 3,** mais illustrant une autre variante de réalisation.
La **fig. 5** est une coupe, analogue à la **fig. 3,** mais illustrant une autre variante de réalisation.

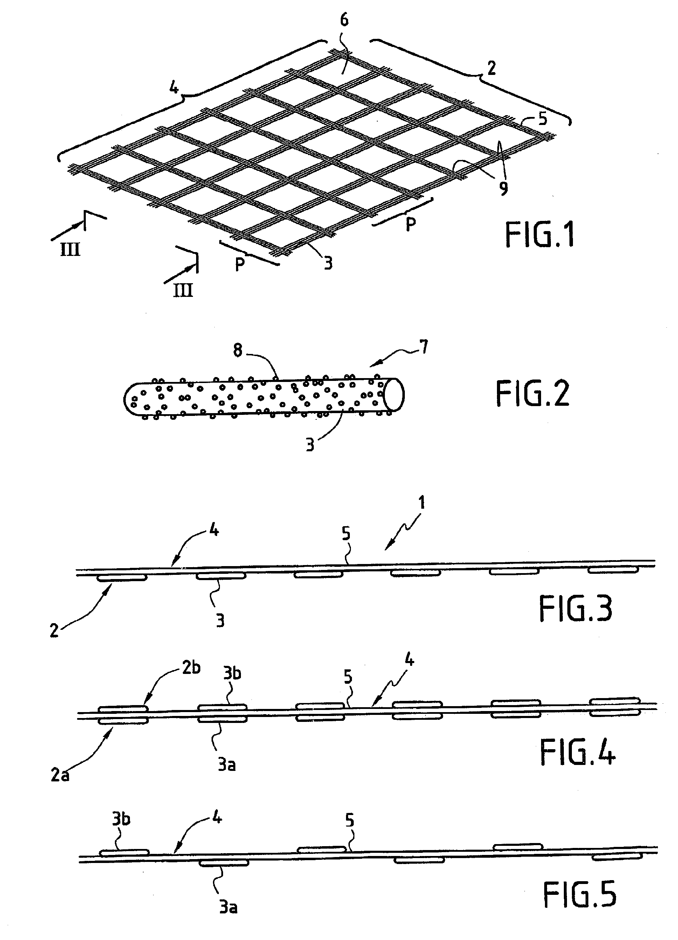

Les **fig. 1** et **2** montrent que le nouveau produit, désigné dans son ensemble par la référence **1**, est composé d'au moins une première nappe **2** de fils de renfort **3** tendus qui s'étendent parallèlement entre eux, avec un intervalle constant dans l'exemple illustré. Ces fils de renfort **3** peuvent être qualifiés de fils de chaîne, par analogie à un procédé de fabrication qui serait semblable au tissage.

Le nouveau produit **1** est aussi composé d'une seconde nappe **4** de fils de renfort **5** qui s'étendent aussi parallèlement entre eux, également dans l'exemple à intervalle constant, de préférence mais non exclusivement, identique à celui déterminant l'espacement entre les fils **3**. Par convention toujours, les fils **5** peuvent être qualifiés de fils de trame et, dans l'exemple illustré, s'étendent selon une direction générale qui est orthogonale à celle des fils **3**. Il doit, cependant, être considéré qu'une orientation oblique pourrait aussi être retenue.

La nappe **4** de fils **5** est placée d'un même côté de la nappe **2** en étant située en dessous ou au-dessus.

Il est possible de retenir, pour les fils **3** et **5**, à chaque fois, un monobrin de section droite transversale circulaire ou analogue, un monobrin à caractère plat ou une forme multifilamentaire, étalée ou non, ou organisée pour que les filaments s'étendent parallèlement entre eux, pour former un faisceau de filaments, également appelé mèche. Les fils de renfort peuvent être tous ou en partie texturés ou voluminisés.

Les fils **3** sont, de préférence, de même nature et composition pour l'ensemble de la nappe **2.** Il en est de même pour les fils **5** qui, le cas échéant, peuvent être différents en nature et en composition des fils **3**.

A titre d'exemple, les fils **3** et **5** peuvent être constitués entièrement ou à base de fibres de verre, carbone, aramide, polyéthylène téréphtalate haute ténacité ou polyamide. A titre non limitatif, les fils de renfort **3** et **5** peuvent, indépendamment, posséder un titre compris entre 20 et 1 000 tex pour les fils d'aramide, entre 68 et 9 600 tex pour des fils de verre et entre 68 et 6 000 tex pour des fils de carbone.

Au sens de l'invention, il convient de retenir que, préférentiellement, les fils des nappes **2** et **4** sont disposées en mèches espacées régulièrement, mais qu'il pourrait être prévu de les disposer dans l'une et/ou l'autre nappe, de manière qu'ils tendent à recouvrir 100 % de la surface concernée en étant alors alignés côte à côte de façon jointive.

Dans le cas de fils espacés, il doit être considéré que le pas d'écartement **p,** entre les fils **3** et les fils **5,** définit une maille **6** qui permet de caractériser le produit ajouré par un facteur d'ouverture. La représentation de la **fig. 1** à cet égard n'est que l'illustration d'un exemple, étant donné, qu'au sens de l'invention, toutes formes et dimensions de mailles **6** peuvent être retenues, en prévoyant notamment, le cas échéant, un pas d'écartement **p** différent entre les fils **3** de la nappe **2** et les fils **5** de la nappe **4**. De manière avantageuse, le pas d'écartement sera identique dans chacune des nappes et compris entre 0,5 et 20 cm.

Selon l'invention, les fils **5** de la nappe **4** ne sont pas entrecroisés ou entrelacés avec les fils **3** mais sont, au contraire, posés ou déposés sur ces derniers.

Les nappes **2** et **4** sont associées pour posséder une tenue relative conférant un caractère cohérent au nouveau produit **1**. A cette fin, les fils **3** de la nappe **2** sont partiellement recouverts d'une poudre **7**, à base d'une matière thermoplastique ou thermodurcie.

Par poudre, on entend un ensemble de grains ou particules **8**. Comme le montre la **fig. 2,** ces grains **8** recouvrent partiellement la surface développée des fils **3**. Ces grains 8 présentent, de préférence, un diamètre moyen compris entre 50 et 500 µm. La taille des grains **8** de la poudre **7** est adaptée à la taille des fils de renfort **3** pour favoriser l'effet d'accrochage sur la fibre par effet statique.

On pourra utiliser une poudre constituée au moins pour partie d'une matière thermoplastique choisie notamment parmi les résines polyéthylène téréphtalate, polyamide, éthylènevinylacétate, polyoléfine.

La poudre **7** peut, également, être à base de matière thermodurcie choisie parmi les résines époxyde, urée-formol, polyacétate de vinyle, polyesters insaturés, par exemple.

Ces matières thermodurcies sont obtenues par un processus de transformation de type réticulation, durcissement ou, encore, communément cuisson, à partir de systèmes thermodurcissables. De tels systèmes thermodurcissables contiennent, généralement, un prépolymère ou résine thermodurcissable, un agent réticulant ou durcisseur et d'éventuels autres additifs.

D'une façon avantageuse, la poudre **7** a une masse volumique comprise entre 0,9 et 2 g/cm³ et la masse de poudre **7** correspond à 1 à 10 % de la masse totale du produit de renfort.

Lors de la conception du produit **1**, la première nappe **2** de fils de renfort **3**, parallèles entre eux, est constituée à l'aide d'un procédé et d'une installation conventionnelle, comme décrit, par exemple, dans le brevet français publié sous le numéro FR 2 792 951. On fait ensuite passer librement cette nappe **2** dans un bac de poudre qui se dépose sur les fils **3** par effet statique. Afin d'ajuster la quantité de poudre adhérant aux fils **3** par effet électrostatique, la nappe **2** est soumise à des vibrations éliminant ainsi une partie de la poudre déposée.

La seconde nappe **4** de fils **5** de trame est alors déposée sans entrecroisement sur la première nappe **2**. Les deux nappes sont ensuite assemblées par thermocompression. Avant de déposer la seconde nappe **4**, la première nappe **2** peut être chauffée à une température juste suffisante pour assurer le ramollissement de la poudre et ainsi améliorer sa fixation sur les fils de renfort **3**.

Dans le cas où la poudre est à base de matière thermoplastique, on fait passer la nappe **2** de fils de chaîne **3** portant la nappe **4** déposée de fils de trame **5** dans une section de montée en température permettant le ramollissement ou la fusion au moins partielle de la poudre pour lier les fils de chaîne **3** entre eux et les deux nappes entre elles au niveau de leur intersection **9**. Bien entendu, la matière thermoplastique présente une température de ramollissement inférieure à celle da la matière constitutive des fils de renfort.

Dans le cas où la poudre est à base de matière thermodurcissable, l'étape de montée en température s'effectue à une température suffisante pour entraîner la fusion de la poudre. L'activation thermique doit être suffisante pour permettre la réticulation et l'obtention d'une matière thermodurcie. Les températures appropriées seront aisément déterminées par l'homme du métier, en fonction de la spécificité de la poudre utilisée.

Des conditions opératoires convenables pour atteindre un tel résultat font, par exemple, intervenir une montée en température dans une enceinte de l'ordre de 160 à 230 °C selon les matériaux matrice utilisés, puis l'établissement d'une pression par calandrage comprise entre 0,5 à 5 bars avant d'imposer un refroidissement à température ambiante. On pourra, par exemple, utiliser une résine époxy diglycidyl éther de bisphénol A, de poids moléculaire moyen supérieur à 700 g/mol, sous forme de poudre de taille de particules moyenne comprise entre 220 et 240 µm. Cette résine est sans solvant, ce qui élimine les problèmes d'environnement et diminue les besoins énergétiques et contient un agent réticulant approprié, intégré dans la poudre. Avant thermodurcissement, cette résine se comporte comme un thermoplastique à bas point de ramollissement. Lors de la conception du produit de renfort **1**, l'ensemble est soumis à une gélification contrôlée pour avoir un collage par point (20 s à 200°C), suivie d'une réticulation complète pour acquérir les performances mécaniques, puis d'un refroidissement à température ambiante.

La liaison entre les fils s'effectue lors de cette étape par l'intermédiaire des grains **8** de poudre **7**. Il est bien évident que cette étape de thermocompression entraîne une certaine déformation des grains **8** de la poudre **7**.

La dernière étape du procédé consiste à faire passer le produit de renfort dans une section de refroidissement pour solidifier les points de jonction et conférer au produit fabriqué une cohérence et une tenue propre.

On pourra noter que, durant toutes les étapes du procédé, les fils de chaîne sont maintenus sous tension.

Les **fig. 4** et **5** montrent une variante de réalisation dans laquelle le nouveau produit ajouré **1** fait intervenir deux nappes tendues **2a** et **2b** qui répondent aux caractéristiques données ci-avant et entre lesquelles sont disposés, sans entrelacement, les fils **5** de la nappe **4.** Les nappes **2a** et **2b** sont toutes deux poudrées et sont obtenues comme décrit précédemment pour la nappe **2**. Les deux nappes **2a** et **2b** de chaîne, une fois poudrées, se rejoignent avec la nappe **4** de fils de trame **5** sur un cylindre de formation classique dans ce type d'installation, afin de réaliser l'assemblage par thermocompression. Il est possible d'afficher, lors de la thermocompression, un voile de surface ou d'aspect sur l'une ou les deux faces du produit de renfort **1**. Ce voile d'aspect ou de surface peut, par exemple, se présenter sous la forme d'un voile polyester, un voile de verre, un voile de décor, un film d'étanchéité ou un complexe multifonctions.

Dans un tel exemple de réalisation, tel qu'illustré par la **fig. 4,** les fils **3a** et **3b,** constitutifs des nappes **2a** et **2b** sont disposés en superposition de plans, alors qu'une variante selon la **fig. 5** consiste à les disposer de manière alternée, de la nappe **2a** à la nappe **2b**, par exemple d'un demi-pas d'écartement entre deux fils **3** constitutifs de la même nappe.

Ainsi, le produit **1** selon l'invention peut être obtenu de manière simple et propre. Un tel produit **1** est également facilement stockable, manipulable et sa découpe est aisée. De par sa structure et la présence de liaison par points, un tel produit se caractérise également par une faculté de déformation élastique et de souplesse, ce qui permet de le mettre en forme si besoin et le rend éventuellement enroulable.

Il va de soi que le nouveau produit selon l'invention peut être fabriqué en toute largeur, à un prix de revient intéressant, sans nécessiter d'installations particulièrement complexes.

De plus, le produit de renfort **1** confectionné présente une compatibilité améliorée avec les matrices dans lesquelles il doit être ultérieurement noyé. En effet, une partie de la surface des fils de renfort **3** est directement accessible à toute résine ultérieurement injectée. La poudre **7** ne recouvre que partiellement la surface des fils de renfort **3**. De manière avantageuse, la poudre **7** recouvre moins de 5 % de la surface développée des fils **3** de renfort, préférentiellement moins de 0,5 %. Les fils peuvent également s'ouvrir pour favoriser la mouillabilité et l'imprégnation de la résine, ce qui permet d'obtenir une pièce composite plus homogène et présentant des performances mécaniques améliorées.

Par ailleurs, la considération de la **fig. 1** montre que le nouveau produit **1**, du fait de la nature tendue des fils de renfort **3** constitutifs de la nappe **2**, voire des fils **5** constitutifs de la nappe **4**, détermine un réseau maillé dans lequel les deux nappes constitutives restent établies chacune dans son plan, de sorte que le produit fini est exempt d'embuvage, comme cela se produit avec les entrelacements ou entrecroisements des fibres tissées.

Un tel nouveau produit est à même de fournir des caractéristiques de renforcement améliorées en raison de ses fils tendus et présente aussi des faces planes qui permettent de réaliser une pièce finie ou semi-finie dans laquelle l'une au moins des faces doit présenter un aspect uniforme, lisse et régulier. Un tel résultat peut être obtenu en orientant alors le nouveau produit, lors de sa mise en oeuvre en tant qu'armature de renforcement, de telle manière que la nappe **2** soit orientée vers la face devant présenter l'état de surface lisse et régulier. Le produit **1** selon l'invention est donc parfaitement adapté pour servir d'armature de renfort pour des résines ou bitumes.

Le produit nouveau **1** selon l'invention peut, notamment, être utilisé en tant qu'armature en étant totalement noyé dans une matrice ou en étant simplement associé à une matière de remplissage sur une seule face.

La présente invention a donc également pour objet des pièces composites composées, au moins pour partie, d'un produit de renfort **1** selon l'invention, allié à une matrice de matière thermoplastique ou thermodurcie. De telles pièces sont obtenues, non nécessairement, par moulage et conformation mais, principalement, par injection de la résine, en relation avec le produit de renfort **1**.

Le produit de renfort **1** selon l'invention peut être utilisé pour la fabrication d'engins de glisse, de skis ou de pales d'éoliennes ou d'éléments pultrudés.

L'invention n'est pas limitée aux exemples décrits et représentés car diverses modifications peuvent y être apportées sans sortir de son cadre.

## Revendications

1. Produit de renfort (**1**) comprenant une première nappe (**2**) de fils de renfort (**3**) parallèles entre eux et une seconde nappe (**4**) de fils de renfort (**5**) parallèles entre eux et s'étendant transversalement par rapport à la première nappe (**2**, **2a**),
**caractérisé en ce que** les fils de renfort (**3, 3a**) de la première nappe (**2**) sont partiellement recouverts d'une poudre (**7**) à base de matière thermoplastique ou thermodurcie qui assure une liaison par points entre les fils de renfort (**3**) au sein de la première nappe (**2**), d'une part, et entre les fils de renfort (**3**) de la première nappe (**2**) et ceux (**5**) de la seconde nappe (**4**), d'autre part.

2. Produit de renfort **(1)** selon la revendication 1, **caractérisé en ce qu'**il comprend une troisième nappe (**2b**) de fils de renfort (**3b**) parallèles entre eux et s'étendant parallèlement à la première nappe (**2a**), les fils de renfort (**5**) de la seconde nappe (**4**) étant emprisonnés entre les fils de renfort (**3a, 3b**) de la première (**2a**) et de la troisième nappe (**2b**) et les fils de renfort (**3b**) au sein de la troisième nappe (**2b**) étant partiellement recouverts d'une poudre (**7**) qui assure une liaison par points entre les fils de renfort (**3b**) au sein de la troisième nappe (**2b**), d'une part, et entre les fils de renfort (**3b**) de la troisième nappe (**2b**) et ceux (**5**) de la deuxième nappe (**4**), d'autre part.

3. Produit de renfort **(1)** selon la revendication 1 ou 2, **caractérisé en ce que** moins de 5 %, de préférence moins de 0,5 % de la surface des fils de renfort (**3a, 3b**) de la première nappe (**2a**) et éventuellement de la troisième nappe (**2b**) est recouvert de poudre 7.

4. Produit de renfort (**1**) selon lune des revendications 1 à 3, caractérisé en que, dans chacune des nappes, les fils de renfort sont jointifs.

5. Produit de renfort (**1**) selon l'une des revendications 1 à 3, caractérisé en que dans chacune des nappes, les fils de renfort sont disposés en mèches pour former une grille.

6. Produit de renfort (**1**) selon la revendication 5, caractérisé en que, dans chacune des nappes, les mèches sont régulièrement espacées d'un pas compris entre 0,5 et 20 cm.

7. Produit de renfort (**1**) selon la revendication 5 ou 6, **caractérisé en ce que** les mèches de fils de renfort (**3a, 3b**) de la première nappe (**2a**) et de la troisième nappe (**2b**) coïncident en superposition de plan.

8. Produit de renfort (**1**) selon la revendication 5 ou 6, **caractérisé en ce que** les mèches de fils de renfort (**3a**) de la première nappe (**2a**) sont décalés d'un demi pas par rapport aux mèches de fils de renfort (**3b**) de la troisième nappe (**2b**).

9. Produit de renfort (**1**) selon l'une des revendications 1 à 8, **caractérisé en ce que** la poudre **(7)** est constituée de grains **(8)** de diamètre moyen compris entre 50 et 500 µm.

10. Produit de renfort **(1)** selon l'une des revendications 1 à 9, **caractérisé en ce que** la poudre **(7)** a une masse volumique comprise entre 0,9 et 2 g/cm³ et **en ce que** la masse de poudre **(7)** correspond à 1 à 10 % de la masse totale du produit de renfort **(1).**

11. Produit de renfort **(1)** selon l'une des revendications 1 à 10, **caractérisé en ce que** la poudre **(7)** est à base d'une matière thermodurcie choisie parmi les résines époxyde, urée formol, polyacétate de vinyle, polyesters insaturés.

12. Produit de renfort (**1**) selon l'une des revendications 1 à 10, **caractérisé en ce que** la poudre (**7**) est à base d'une matière thermoplastique choisie parmi les résines polyéthylène téréphtalate, polyamide, éthylènevinylacétate, polyoléfine.

13. Produit de renfort (**1**) selon l'une des revendications 1 à 12, **caractérisé en ce que** les fils de renfort (**3a, 3b, 5**) sont en une matière choisie parmi : verre, carbone, aramide, alcool polyvinylique, polyéthylène téréphtalate haute ténacité, polyamide.

14. Produit de renfort (**1**) selon l'une des revendications 1 à 13, **caractérisé en ce que** les fils de renfort (**3a, 3b, 5**) sont tous ou en partie texturés ou voluminisés.

15. Produit de renfort (**1**) selon l'une des revendications 1 à 14, **caractérisé en ce qu'**il est associé à un voile de surface ou d'aspect sur l'une ou deux de ses faces.

16. Procédé de fabrication d'un produit de renfort (**1**) selon la revendication 1, comprenant les étapes suivantes :
**a)** une première nappe **(2, 2a)** de fils de renfort **(3, 3a)** parallèles entre eux, est constituée puis passée dans de la poudre (**7**) à base de matière thermoplastique ou thermodurcissable,
**b**) la première nappe (**2, 2a**) ainsi obtenue est soumise à des vibrations, afin d'éliminer une partie de la poudre (**7**) déposée sur la surface des fils de renfort **(3, 3a),**
**c**) une seconde nappe (**4**) de fils de renfort (**5**) parallèles entre eux est déposée sur la première nappe (**2, 2a**), la seconde nappe (**4**) s'étendant transversalement à la première nappe (**2, 2a**) sans entrecroisement,
**d)** les deux nappes **(2, 2a, 4)** sont assemblées par thermocompressage.

17. Procédé de fabrication selon la revendication 16, **caractérisé en ce que** l'étape c) est précédée d'une étape de chauffage de la première nappe (**2, 2a**) à une température juste suffisante pour assurer le ramollissement de la poudre (**7**), afin d'améliorer sa fixation sur les fils de renfort (**3, 3a**).

18. Procédé selon la revendication 16 ou 17, **caractérisé en ce que** la poudre (**7**) est constituée de grains (**8**) de diamètre moyen compris entre 50 et 500 µm.

19. Procédé selon l'une des revendications 16 à 18, **caractérisé en ce que** la poudre (**7**) est à base d'une matière thermoplastique choisie parmi les résines polyéthylène téréphtalate, polyamide, éthylènevinylacétate, polyoléfine.

20. Procédé selon l'une des revendications 16 à 18, **caractérisée en ce que** la poudre (**7**) est à base d'une matière thermodurcissable choisie parmi les résines époxyde, urée formol, polyacétate de vinyle, polyesters insaturés.

21. Procédé selon l'une des revendications 16 à 20, **caractérisé en ce qu'**après l'étape b), la poudre (**7**) recouvre moins de 5 %, de préférence moins de 0,5 % des fils de renfort (**3, 3a**) de la première nappe (**2, 2a**).

22. Pièce composée au moins pour partie d'un produit de renfort (**1**) selon l'une des revendications 1 à 15 et d'une matrice de résine thermoplastique ou thermodurcie en relation avec le produit de renfort (**1**).

23. Utilisation d'un produit de renfort (**1**) selon l'une des revendications 1 à 15 pour la fabrication de skis, de pales d'éoliennes ou d'éléments pultrudés.
